# EUROPEAN PATENT SPECIFICATION

(11) **EP 4 065 948 B1**
(45) Date of publication and mention of the grant of the patent: **05.11.2025**
(21) Application number: 20891983.7
(22) Date of filing: 13.09.2020
(51) Int. Cl.: F02P 17/12, F02P 3/04, G01M 15/11, F02D 35/02

(54) **MISFIRE DETECTION SYSTEM OF AN INTERNAL COMBUSTION**
FEHLZÜNDUNGSERKENNUNGSSYSTEM EINES VERBRENNUNGSMOTORS
SYSTÈME DE DÉTECTION DE RATÉ D'ALLUMAGE D'UNE COMBUSTION INTERNE

(30) Priority: 27.11.2019 IN 201941048537
(43) Date of publication of application: 05.10.2022
(73) Proprietor: TVS Motor Company Limited, 600006 Chennai (IN)
(72) Inventor: JAYPRAKASH BAGADE, Monika, Chennai, 600 006 (IN); RAVEENDRANATH, Arjun, Chennai, 600 006 (IN); BHUSHAN DAS, Himadri, Chennai, 600 006 (IN); JABEZ DHINAGAR, Samraj, Chennai, 600 006 (IN)
(74) Representative: Patentanwaltskanzlei Matschnig & Forsthuber OG
(86) International application number: PCT/IN2020/050792
(87) International publication number: WO 2021/106009

(56) References cited:
- EP-A2- 1 316 723
- JP-A- 2010 053 780
- US-A1- 2009 292 438
- US-B1- 6 186 129
- US-B1- 6 205 844
- US-B1- 6 222 367
- US-B2- 6 803 765
- US-B2- 7 677 230
- US-B2- 8 375 914

## Description

### TECHNICAL FIELD

The present subject matter relates to spark ignition engines. More particularly, detection of a misfire and a partial misfire in a spark ignition engine using an ion current measurement circuit is disclosed.

### BACKGROUND

Internal Combustion (IC) engines are significantly contributing to pollution and global warming by emitting various exhaust gases into the environment. An IC engine produces power by burning of fossil fuel that emits harmful gases, such as, CO, HC, NOx and hydrocarbons. The emission of gases has been and is deteriorating the environmental condition and hence, vehicle manufacturers are continuously striving to bring in advances in technology to improve the performance of the IC engine and reduce the emissions.

In addition to the control of emission of gases, the Automobile industry is implementing "On board diagnostic (OBD)" on vehicles for intimating user about the status of vehicle conditions. OBD system across major jurisdictions is being implemented in a phased manner and is subdivided in two categories, viz. OBD I & OBD II. OBD II focuses on three main aspects - Engine misfire detection, Catalytic convertor monitoring, and Lambda sensor monitoring.

To improve engine combustion efficiency & reduce emissions, it is essential to detect and monitor misfire event in an internal combustion (IC) engine. Misfire occurs when the injected air fuel mixture does not burn at all or partially burns. Misfiring of the IC engine affects the quality of combustion and degrades the performance of a catalyst convertor, thereby leading to increase in emissions, which is undesirable.

Published US patent application US 2009/0292438 A1 describes an ignition system corresponding to the preamble part of claim 1.

Further ignition devices are disclosed in JP 2010-053780 A, EP 1316723 A2, and US 7,677,230.

### SUMMARY OF THE INVENTION

The invention is directed at a misfire detection system as described in claim 1. The dependent claims describe further optional features of the invention.

### BRIEF DESCRIPTION OF DRAWINGS

The detailed description is described with reference to the accompanying figures. The same numbers are used throughout the drawings to reference like features and components.
Fig. **1** exemplarily illustrates a circuit diagram of an existing ignition system of an IC engine;
Fig. **2** exemplarily illustrates a circuit diagram of the existing ignition system of an IC engine connected to an ion current measurement circuit;
Fig. **3** exemplarily illustrates a schematic diagram of a misfire detection system, according an embodiment of the present invention;
Fig. **4** exemplarily illustrates the misfire detection system comprising an ion current measurement circuit and a signal processor, in accordance to an embodiment of the present invention;
Figs. **5-6** exemplarily illustrate timing diagrams for the primary voltage in the primary winding of the ignition coil and the ion current during a misfire condition; and
Figs. **7-8** exemplarily illustrate timing diagrams for the primary voltage in the primary winding of the ignition coil and the ion current during a no misfire condition.

### DETAILED DESCRIPTION OF THE INVENTION

Misfire events in an IC engine can be categorized as partial or complete, based on the amount of combustion occurring during a particular engine cycle. In most vehicles, identification of misfire is performed by monitoring angular acceleration of engine crank-shaft. However, single cylinder engines with lower capacity (less than 200 cubic centimeter) provide challenges to identify misfire due to low mechanical inertia of the IC engine using the same approach. The problem of misfire identification for the single cylinder IC engines turns out to be more challenging due to presence of various load disturbances on the power train, when the engine is employed in a vehicle.

Several other techniques are designed for the detection of engine misfire for the single cylinder engines. Such techniques include analysis of instantaneous crankshaft speed, analysis of in-cylinder pressure, analysis of instantaneous crankshaft torque, etc. Evaluation of the crankshaft speed for detection of misfire faces a lot of challenges due to low mechanical inertial and load disturbances in engines. Alternate solutions to address the problem of detection of misfire event in the engine utilize the ion current generated in a sparking event in the engine.

When air-fuel mixture ignites inside the IC engine cylinder, air particles get ionized. By applying a suitable high-voltage on spark plug, it is possible to measure the ion current as the amount of ion current reflects the level of ionization of the air-fuel mixture. Thus, the flow of ion current depends on the combustion event. The ion current signal can be captured with the help of an ion current measurement circuit. In order to generate the flow of ion current, a "voltage biasing" circuit is necessary to generate the potential difference across the spark plug electrodes after the spark is triggered.

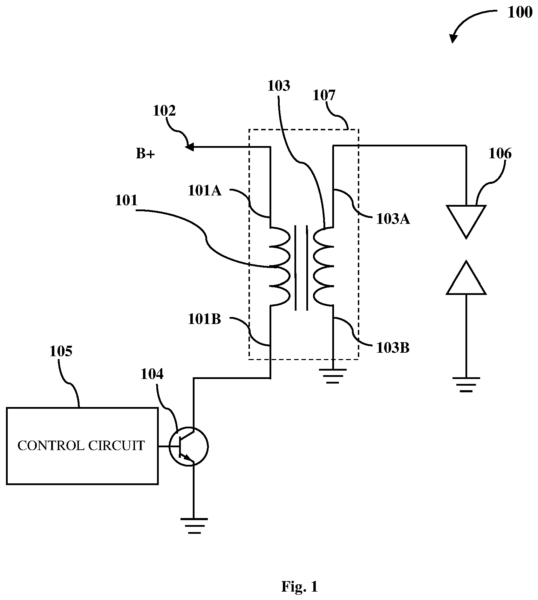

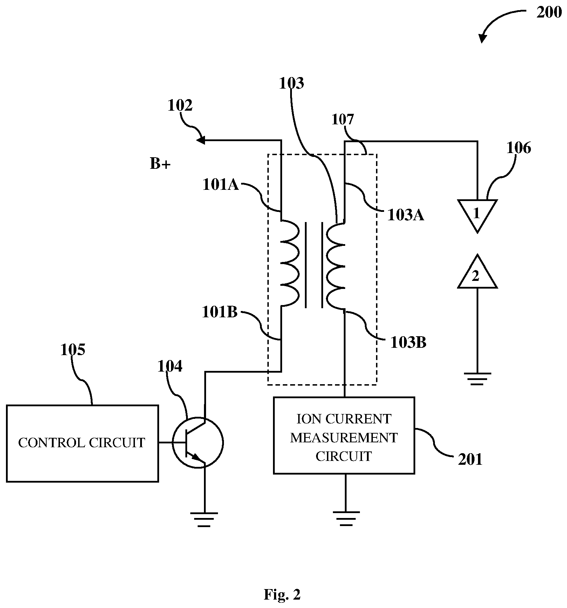

Fig. **1** exemplarily illustrates a circuit diagram of an existing ignition system **100** of an IC engine. The ignition system **100** consists of an ignition coil **107** with a primary winding **101** and a secondary winding **103,** a spark plug **106,** and a control circuit **105,** for example, an electronic control unit (ECU) with an electrical switching device **104** to produce a high voltage spike required to generate a spark in the engine cylinder. The primary winding **101** is connected between a battery **102** and the electrical switching device **104.** When the electrical switching device **104** is in a closed state, the primary winding **101** of the ignition coil **107** stores energy. As soon as the control circuit **105** changes the state of the electrical switching device **104** to open, a voltage e.g. 400V is generated in the primary winding **101** of the ignition coil **107,** due to the sudden interruption of current flow in the inductive circuit. A secondary high voltage of around 20-25 kV (depending upon the turn ratio of primary & secondary coils) is generated in the secondary winding **103.** The secondary voltage is applied at the spark plug **106,** which results into voltage breakdown across gap of the spark plug **106** and a spark current starts flowing into the spark plug **106** through ground connection of the spark plug **106.** Subsequently, the spark current generates the flow of an ion current across the spark plug **106** as described in Fig. **2****.**

Fig. **2** exemplarily illustrates a circuit diagram **200** of the existing ignition system **100** of an IC engine connected to an ion current measurement circuit **201.** As exemplarily illustrated, the ion current measurement circuit **201** is connected to the secondary winding **103** of the ignition coil 107 to provide a biasing voltage to the spark plug **106,** which in turn generates the flow of ion current after the sparking event. Also, the existing ion current measurement circuit 201 consists of a capacitor which is charged during trigger of the spark. Once the spark is triggered, the charge held by the capacitor generates a potential difference across the spark electrodes of the spark plug **106,** which results in flow of the ion current.

The designs of ignition coils **107** in the existing ignition system 100 exemplarily illustrated in Figs. **1-2** have a separate ground connection for each of the primary winding **101** and the secondary winding **103** of the ignition coil **107.** As shown in Fig. **1****,** terminal **101B** of the primary side **101** and terminal **103B** of the secondary side **103** of the ignition coil **107** are electrically isolated. The ion current measurement circuit **201** is connected to the terminal **103B** to measure the ion current and subsequently, detect misfire in an IC engine, as shown in Fig. **2****.**

However, ignition coils of spark ignition engines are designed to simplify the process of ignition coil production and reduce manufacturing cost of the ignition system. In such ignition coils, the terminals **101B** and **103B** are connected internally via a common winding connection and there is no provision to connect the ion current measurement circuit **201** to the secondary winding **103 separately.** Due to the common electrical connection of the terminals **101B** and **103B of the** primary winding **101** and the secondary winding **103,** the existing ion current measurement circuit 201 gets connected to both the windings **101** and **103.** As the electrical resistance of the primary winding **101** is much lower compared to the electrical resistance of the secondary winding **103,** the capacitor of the existing ion current measurement circuit **201** would discharge from the primary winding **101** instead of the secondary winding**103** and hence no ion current flows in the spark plug **106.**

In applications of the combustion engine, such as vehicles, following are the disadvantages of a misfire condition: Due to the occurrence of a misfire in combustion event, fuel will be wasted as there is no spark for fuel to burn. This will degrade the performance of the vehicle due to reduction in mileage. Misfire has direct impact on power/pick up of vehicle as there is loss of combustion event. The user may feel a sudden jerk in driving due to misfire. These may cause discomfort to driver. Also, due to misfire, the unburnt fuel in the exhaust affects the life of the catalyst in the converter and has direct impact on emissions. Detection and reduction of misfire will have an impact on the durability of vehicle Thus, the known art suffers from failure to detect misfire effectively leading to poor reliability of ignition system and eventually high emissions, rider discomfort, and reduced mileage. Thus, there exists a need for a design of a misfire detection system comprising an ion current measurement circuit for detecting no-misfires, complete misfires, and partial misfires effectively in engines for smooth experience, durability, and adherence to emission norms by the engine, that overcomes above and other known problems in the art.

With the above objectives in view, the prevent invention discloses a misfire detection system comprising an ion current measurement circuit to precisely detect a complete misfire and a partial misfire in a spark ignition engine, where a primary winding and a secondary winding of an ignition coil are internally connected.

It is an object of the present invention to restrict the flow of ion current through the low resistance primary winding. It is another object of the invention to provide a biasing voltage circuit in the ion current measurement circuit that charges the capacitor in the ion current measurement circuit to a suitable value during trigger of a spark in the spark plug and apply this stored charge to the spark plug to generate a potential difference across the spark plug electrodes, after the spark is triggered. This results in the flow of ion current through the ion current measurement circuit and the measurement of the ion current will help in detection of occurrence of a misfire or a partial misfire. The current subject matter enables overcoming the drawbacks of the known art and ensures the misfire is accurately detected thereby enabling reliable control and reduction of emissions for an engine especially of a small capacity.

In an embodiment, a misfire detection system of an IC engine is disclosed. The misfire detection system comprises an ignition system, an ion current measurement circuit, and a signal processor. The ignition system comprises an ignition coil comprising a primary winding and a secondary winding, where a first end of the primary winding is electrically connected to a first end of the secondary winding, and a spark plug electrically connected in series to a second end of the secondary winding of the ignition coil. A first terminal of the spark plug is connected to the second end of the secondary winding and a second terminal of the spark plug is grounded. The ion current measurement circuit is electrically connected to the first end of the primary winding and the first end of the secondary winding for measuring an ion current generated from the spark plug after a sparking event. The signal processor processes and conditions the ion current measured by the ion current measurement to determine occurrence of a misfire in the IC engine.

A second end of the primary winding of the ignition coil is operatively coupled to a power source through a first diode. The first end of the primary winding of the ignition coil is operatively coupled to an electrical switching device for a generating a primary voltage in the primary winding and a secondary voltage in the secondary winding of the ignition coil, and the electrical switching device is controlled by a control unit. The first diode allows flow of a primary current in the primary winding to generate the primary voltage and prevents flow of the ion current in the primary winding through the first end of the secondary winding.

The ion current measurement circuit supplies a bias voltage to the spark plug for generating the ion current. the ion current measurement circuit comprises a biasing resistor and a biasing capacitor connected to the first end of the secondary winding for generating the bias voltage for the spark plug. A first terminal of the biasing resistor is connected in series to the first end of the secondary winding and the biasing capacitor is connected in series to a second terminal of the biasing resistor. The biasing capacitor charges using a spark current during the spark event in the spark plug and the biasing capacitor discharges after the sparking event for providing the bias voltage for the spark plug. The biasing capacitor and the biasing resistor define time constant of the ion current measurement circuit and a rate of charging and discharging of the biasing capacitor.

The ion current measurement circuit further comprises a voltage control element connected parallel to the biasing capacitor for limiting the bias voltage across the biasing capacitor during charging. In an embodiment, the voltage control element is a zener diode. The ion current measurement circuit further comprises a voltage divider resistor network, comprising a sensing resistor, connected in series between the biasing capacitor and ground for measuring the ion current. The ion current measurement circuit further comprises a second diode connected in parallel to the sensing resistor for providing a low impedance path for a spark current and impeding flow of the ion current.

In another embodiment, an ion current measurement circuit for measuring an ion current generated from a spark plug of an IC engine is disclosed. In this embodiment, the ion current measurement circuit comprises a biasing resistor connected in series with a first end of a primary winding and a first end of a secondary winding of an ignition coil, a biasing capacitor connected in series to a second terminal of the biasing resistor for generating a bias voltage for the spark plug. A first terminal of the biasing resistor is connected in series to the first end of the secondary winding. A voltage control element is operatively connected in parallel to the biasing capacitor, for limiting the bias voltage across the biasing capacitor during a sparking event using a spark current. A voltage divider resistor network, comprising a sensing resistor, is connected in series between the biasing capacitor and ground for measuring the ion current. A second diode is connected in parallel to the sensing resistor for providing a low impedance path for the spark current and impeding flow of the ion current.

The biasing capacitor charges using the spark current during the spark event in the spark plug, and discharges after the sparking event for providing the bias voltage. In this embodiment, the spark plug is electrically connected in series to a second end of the secondary winding of the ignition coil, wherein a first terminal of the spark plug is connected to the second end of the secondary winding and a second terminal of the spark plug is grounded. A second end of the primary winding of the ignition coil is operatively coupled to a power source through a first diode and the first end of the primary winding of the ignition coil is operatively coupled to an electrical switching device for generating a secondary voltage in the secondary winding of the ignition coil. The first diode allows flow of the primary current in the primary winding and prevents flow of the ion current in the primary winding through the first end of the secondary winding. The ion current measured is processed and conditioned by a signal processor for determining occurrence of a misfire in the IC engine.

In an embodiment, an ignition system of an internal combustion engine is disclosed. The ignition system comprises an ignition coil comprising a primary winding and a secondary winding, a spark plug electrically connected in series to a second end of the secondary winding of the ignition coil, and a first diode electrically connected between a power source and a second end of the primary winding. A first end of the primary winding is electrically connected to a first end of the secondary winding. A first terminal of the spark plug is connected to the second end of the secondary winding and a second terminal of the spark plug is grounded. The first diode allows flow of a primary current in the primary winding and prevents flow of an ion current in the primary winding through the first end of the secondary winding. The ignition system further comprises an electrical switching device electrically connected in series to the first end of the primary winding for generating a secondary voltage in the secondary winding of the ignition coil, wherein the electrical switching device is controlled by a control unit.

In this embodiment, the first end of the primary winding and the first end of the secondary winding is electrically connected to an ion current measurement circuit for measuring the ion current generated from the spark plug after a sparking event. The ion current measurement circuit supplies a bias voltage to the spark plug for generating measuring the ion current. The measured ion current is processed and conditioned by a signal processor for determining occurrence of a misfire in the IC engine.

The present subject matter thus discloses an interplay of the ignition coil with a specific ion current measurement circuit intended to work, when the primary side and the secondary side of the ignition coil have common electrical connection. The summary provided above explains the basic features of the invention and does not limit the scope of the invention. The nature and further characteristic features of the present invention will be made clearer from the following descriptions made with reference to the accompanying drawings.

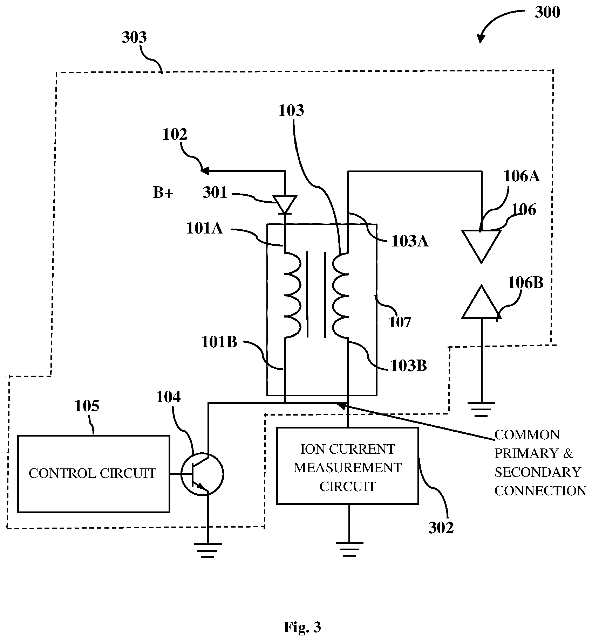

Fig. **3** exemplarily illustrates a schematic diagram of a misfire detection system **300,** according an embodiment of the present invention. As exemplarily illustrated, the misfire detection system **300** comprises an ignition system **303** and an ion current measurement circuit **302.** The proposed design of the ignition system **303** with the ion current measurement circuit **302** accommodates the constraint of common electrical connection of the primary winding **101** and the secondary winding **103** of an ignition coil **107.** The ignition system **303** comprises the ignition coil **107,** a spark plug **106,** a first diode **301,** and an electrical switching device. The ignition coil **107** comprises a primary winding **101** and secondary winding **103.** The ignition coil **107** is a transformer configured to transfer electrical energy in the primary winding **101** to the secondary winding **103** or vice versa. The voltage in the primary winding **101** is a primary voltage and the voltage in the secondary winding **103** is a secondary voltage. The secondary voltage is substantially larger than the primary voltage, and this is achieved by the turns-ratio of the primary winding **101** and the secondary winding **103.** Each of the primary winding **101** and the secondary winding **103** comprises a first end **101B** and **103B** and a second end **101A** and **103A** respectively. The first end **101B** of the primary winding **101** is connected to the first end **103B** of the secondary winding **103.** The spark plug **106** is electrically connected in series to a second end **103A** of the secondary winding **103.** A first terminal **106**A of the spark plug **106,** that is, a terminal of one spark electrode is connected to the second end **103A** of the secondary winding **103** and the second terminal **106**B of the spark plug **106,** a terminal of another spark electrode is grounded. Thus, the spark plug **106** is a grounded spark plug.

The first diode **301** is electrically connected between a power source **102** and a second end **101A** of the primary winding **101.** the first diode **301** allows flow of a primary current in the primary winding **101** and prevents flow of an ion current in the primary winding **101** through the first end **103B** of the secondary winding **103.** The electrical switching device is electrically connected in series to the first end **101B** of the primary winding **101** for generating the secondary voltage in the secondary winding **103** of the ignition coil **107.** The electrical switching device **104** is controlled by a control unit **105.** The electrical switching device **104** may be a transistor, a switch, a relay, or a combination thereof. The control unit **105** may be an engine control unit that generates a spark actuation signal to trigger generation of spark at spark gap of the spark plug **106** for combustion of air fuel mixture in the cylinder of the engine.

Based on the spark actuation signal, the control unit **105** controls the opening and closing of the electrical switching device **104.** When the spark actuation signal is high, the electrical switching device **104** is closed connecting the terminal **101B** of the primary winding **101** to ground. This results in forward bias of the first diode **301** and the flow of primary current from the power source **102** through the primary winding **101.** The primary current flows from the power source **102,** a battery through the first diode **301** and the primary winding **101** towards the ground. The primary winding **101** stores energy during dwell time, that is, the time duration of flow of primary current in the primary winding **101.** The control unit **105** may now transmit a low spark actuation and the electrical switching device **104** is opened. As soon as the electrical switching device **104** is opened by the control circuit **105,** a transient primary voltage appears at the terminal **101B** of the primary winding **101** due to the sudden interruption of the primary current flow in the inductive circuit of the primary winding **101.** This leads to a secondary voltage being generated at the secondary winding **103** at termination of dwell time. The secondary voltage is applied to the spark plug **106** and a voltage break down takes place in the gap of the spark plug **106,** thus a spark is generated, During the sparking event, the spark generated in the gap of the spark plug **106** ignites the air fuel mixture and the spark current flows through gap in the spark plug **106** through the secondary winding **103.** The first diode **301** is reverse biased as the voltage at the terminal **101B** is much higher than the battery voltage at the terminal **102.**

The first end **101B** of the primary winding **101** and the first end **103B** of the secondary winding **103** are electrically connected to an ion current measurement circuit **302.** The ion current measurement circuit **302** supplies a bias voltage to the spark plug **106** for generating an ion current in the secondary winding **103.** The ion current measurement circuit **302** also measures the ion current generated from the spark plug **106** after the sparking event. Since the first diode **301** connected to the primary winding **101** of the ignition coil **107** is reverse biased, the circuit from the battery to the electrical switching device **104** is not complete. Thus, the ion current does not flow via the primary winding **101.**

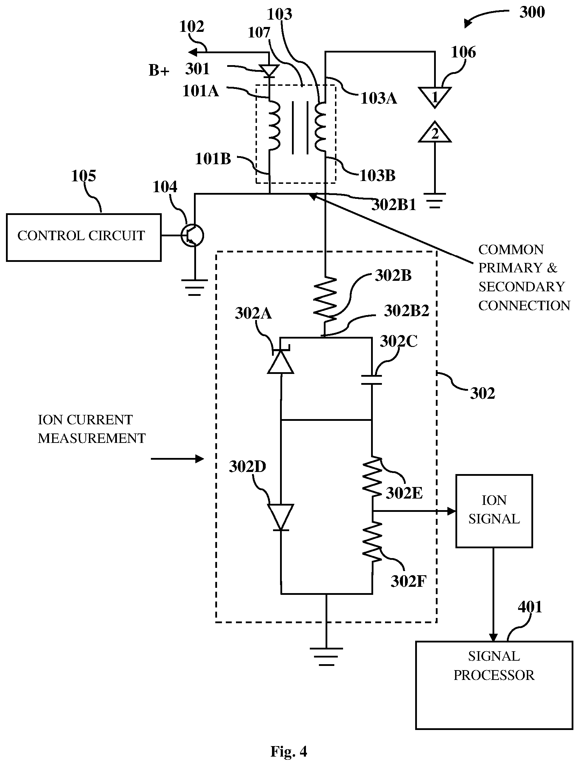

Also, the spark current generated during the sparking event does not flow from the secondary winding **103** via the primary winding **101,** the battery at terminal **102,** and the ground connection, even though the resistance of the circuit connected to the primary winding **101** is lower than the secondary winding **103.** The secondary winding **103** is provided with a ground connection through the ion current measurement circuit **302** as shown in Fig **3****.** The spark current flows from ground, through the gap of the spark plug **106,** the secondary winding **103,** the ion current measurement circuit **302,** and the ground. The spark current generates the bias voltage in the ion current measurement circuit **302.** The ion current measurement circuit **302** supplies the bias voltage to the spark plug **106** and initiates the flow of ion current in the secondary winding **103** through the ion current measurement circuit **302** as will be disclosed in the detailed description of Fig. 4.

Fig. **4** exemplarily illustrates the misfire detection system **300** comprising the ion current measurement circuit **302** and the signal processor **401,** in accordance to an embodiment of the present invention. As exemplarily illustrated, the ion current measurement circuit **302** comprises a network of a voltage control element **302A,** a diode **302D,** a voltage divider resistor network of resistors **302E** and **302F,** a biasing resistor **302B** and a biasing capacitor **302C.** The biasing resistor **302B** is connected in series with the first end **101B** of the primary winding **101** and the first end **103B** of the secondary winding **103** of the ignition coil **107.** A first terminal **302B1** of the biasing resistor **302B** is connected in series to the first end **103B** of the secondary winding **103.** The biasing resistor **302C** is connected in series to a second terminal **302B2** of the biasing resistor **302B** for generating the bias voltage for the spark plug **106.** The biasing resistor **302C** charges using the spark current during the sparking event in the spark plug **106,** and discharges after the sparking event for providing the bias voltage to the spark plug **106.** The biasing resistor **302C** and the biasing resistor **302B** define time constant of the ion current measurement circuit **302** and a rate of charging and discharging of the biasing resistor **302C.**

The time constant of the ion current measurement circuit **302** is based on the values of the biasing resistor **302B** and the biasing capacitor **302C.** The values of the biasing resistor **302B** and the biasing capacitor **302C** are such that the biasing capacitor **302C** does not get fully charged during the sparking event using the spark current. If the time constant of the ion current measurement circuit **302** is low (~10ms) based on the values of the resistance and capacitance of the biasing resistor **302B** and the biasing resistor **302C,** the spark current flows through the voltage control element **302A** and there can be loss of spark energy.

The voltage control element **302A** is operatively connected in parallel to the biasing resistor **302C,** for limiting voltage across the biasing resistor **302C** during the sparking event. The voltage control element **302A** may be a variety of components but not limited to a zener diode, a transistor, a shunt regulator, or any combination thereof. The zener diode **302A** is connected in parallel to the capacitor **302C** to maintain the suitable bias voltage required to produce the ion current.

The voltage divider resistor network **302E** and **302F,** comprising a sensing resistor **302F,** is connected in series between the biasing resistor **302C** and ground for measuring the ion current. A second diode **302D** is connected in parallel to the sensing resistor **302F** for providing a low impedance path for the spark current and for impeding flow of the ion current. The resistors **302E** and **302F** in the voltage divider resistor network offer higher resistance to the spark current. The second diode **302D** is forward biased to allow the spark current to flow to the ground. The spark current generated flows from the ground, through the gap of the spark plug **106,** the secondary winding **103,** the biasing resistor **302B,** the biasing resistor **302C,** the second diode **302D,** and the ground.

The biasing resistor **302C** of the ion current measurement circuit **302** is configured to provide the bias voltage across the gap of the spark plug **106** via the secondary winding **103** to ionize the air particles and hence produce the ion current. The ion current flows from ground through the voltage divider resistor network **302E** and **302F,** the biasing resistor **302C,** the biasing resistor **302B,** the secondary winding **103,** and the gap of the spark plug **106,** to the ground. The voltage divider resistor network with the resistors **302E** and **302F** forms a sensing circuit for the ion current. The voltage measured across the sensing resistor **302F** is indicative of the ion current. The flow of the ion current produces a negative voltage across the sensing resistor **302F.** This voltage is a measure of the ion current flow and is sensed as an ion current signal. The signal processor **401** processes and conditions the measured ion current signal for detecting the occurrence of a misfire in the engine. This ion current signal is further processed through the filtering circuitry of the signal processor **401** to extract the desired information. The resistance of the sensing resistor **302F** is selected to provide a voltage magnitude suitable for the signal processor **401** to sense and process the ion current signal. That is, the sensing resistor **302F** may be selected to ensure that a sufficiently large voltage is induced by the ion current flow to avoid noise susceptibility or detection errors. The sensing resistor **302F** is employed to reduce voltage levels of electrical noise experienced by the signal processor **401** while sensing and processing the ion current signal. The voltage across the sensing resistor **302F** is obtained by applying voltage divider across the resistors **302E** and **302F.** Thus, the voltage of the ion current signal is influenced by the resistance of both resistors **302E** and **302F.**

The biasing resistor **302B** is connected between the ignition coil **107** and the biasing capacitor **302C** to define the time constant of the ion current measurement circuit **302.** The voltage across the biasing capacitor **302C** is restricted to the maximum rated voltage of the zener diode **302A.** The bias voltage across the biasing resistor **302C** also limits the maximum value of primary voltage in the primary winding **101.** The value of biasing resistor **302B** is critical to maintain the primary voltage value to its desired condition for sparking event to take place.

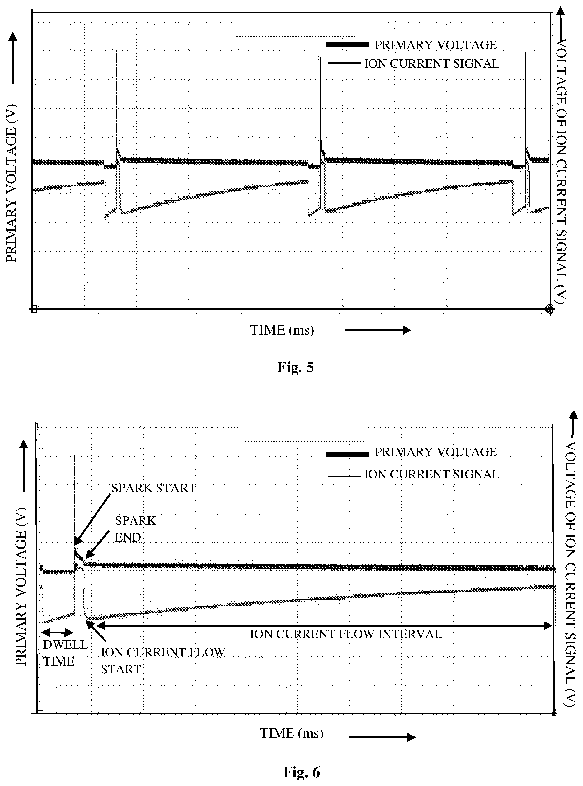

The values of the biasing resistor **302B** and the biasing capacitor **302C** are configured in such a way that the time constant (T) of circuit is equal to 1.5ms (~RC). The biasing capacitor **302C** requires approximately 5T duration (~ 7.5 ms) to charge fully using the spark current. The maximum time for the trigger of the spark is more than the time constant (t) and less than charging time (5T) of the biasing resistor **302C.** Thus, the spark current would always flow through the biasing capacitor **302C** as the biasing capacitor **302C** would never be fully charged and reach an open circuit state. The charged biasing capacitor **302C** applies the bias voltage to the gap of the spark plug **106** after the trigger of the spark, which causes flow of the ion current through the sensing resistor **302F.** The ion current is measured across the sensing resistor **302F** and further processed through the signal processor **401** to get desired information on occurrence of a misfire or a partial misfire in the engine. The signal processor **401** detects the occurrence of misfire based on the trend of the ion current signal during a misfire condition and no misfire condition. The trends in the ion current signal during a misfire condition and no misfire condition are exemplarily illustrated in Figs. **5-8****.**

Figs. **5-6** exemplarily illustrate timing diagrams for the primary voltage in the primary winding **101** of the ignition coil **107** and the ion current during a misfire condition. Fig. **6** is an enlarged view of the timing diagram illustrated in Fig. **5****.** The misfire condition may be a partial misfire condition or a complete misfire condition. Some amount of ion current flows due to incomplete combustion during the partial misfire. During a complete misfire condition due to the absence of spark, there is no flow of the ion current. As can be seen, at an instant when the sparking event ends after a dwell time, the ion current starts flowing in the ion current measurement circuit. However, when there is a misfire in the circuit, the spikes in the ion current signal are absent or suppressed as shown in Figs. **5-6****.**

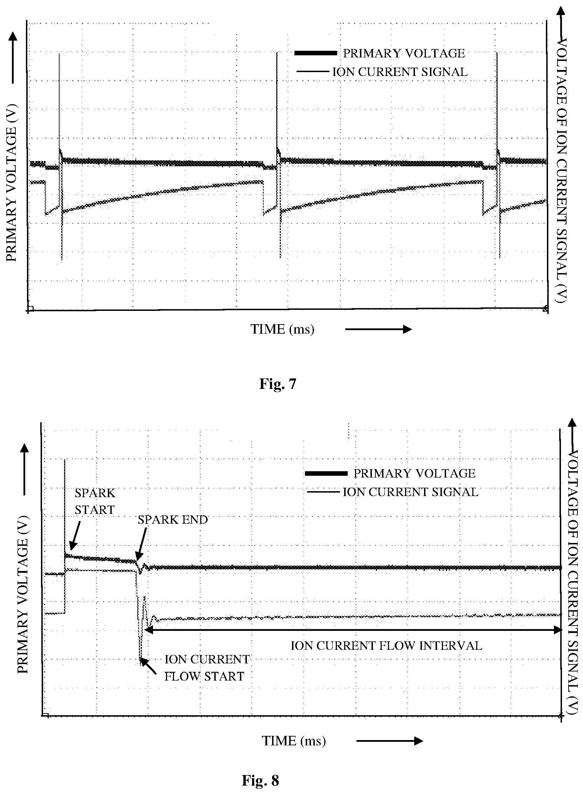

Figs. **7-8** exemplarily illustrate timing diagrams for the primary voltage in the primary winding **101** of the ignition coil **107** and the ion current during a no misfire condition. Fig. **8** is an enlarged view of the timing diagram illustrated in Fig. **7****.** As can be seen, at an instant when the sparking event ends after a dwell time, the ion current starts flowing in the ion current measurement circuit. During normal combustion cycle, when there is no misfire in the ignition system **303,** some oscillations are observed in the ion current signal at the end of trigger of spark. These oscillations occur due to the ionization process. The combustion event thus is identified by the presence of oscillations in the ion current signal. The misfire in the combustion cycle is found out by the absence of oscillations in ion current circuit. Even though oscillations are not absent in Figs. **5-6****,** some amount of ion current is flowing through the ion current measurement circuit **302.** The signal processor **401** performs analysis of the waveforms to understand the features of the ion current signal that are to be extracted and supervised in order to implement a robust misfire detection strategy. The signal processor **401** may detect the presence and absence of oscillations in the waveforms and the frequency of oscillations to determine an occurrence of a misfire, a partial misfire, and a no-misfire in the IC engine.

Embodiments of the misfire detection system disclosed here provides technical advancement in the field of IC engine performance in the following manner: The interplay of the ignition system with common connection between the primary winding and the secondary winding of the ignition coil, the ion current measurement circuit, and the signal processor effectively detects the occurrence of misfire in the IC engines, with reduced energy losses. The biasing capacitor, if fully charged, behaves as an open circuit and there would not be any path for the flow of the spark current through the biasing capacitor and there will be loss of the spark energy. To avoid this, the values for the biasing resistor and the biasing capacitor are selected in a manner to never fully charge the biasing capacitor. The second diode provides a path for the spark current and limits the voltage across the voltage divider resistor network to protect the biasing resistor, the biasing capacitor, and the signal processor from over-voltage conditions.

Also, the capacitance of the biasing capacitor is chosen to ensure that the bias voltage applied to the spark gap remains relatively constant during an engine cycle. That is, the rate of discharge of the biasing capacitor is ensured to not drop drastically when the ion current is being measured by the sensing resistor. If the primary voltage is less than a predetermined value, it would not be able to generate spark in the secondary side. The value of the biasing resistor is selected to maintain the primary voltage value to its desired condition for the sparking event to take place. The capacitance of the biasing capacitor ensures an appropriate bias voltage is applied to the spark plug. During normal operating condition (dwell time), the first diode is forward biased and there is no affect in the ignition coil operation. During sparking and ion current flow, the first diode gets reverse biased as the voltage at the first end of the secondary winding is much higher than battery voltage. This prevents the discharge of biasing capacitor from the primary winding and allows the flow of ion current through the secondary winding.

Further, all the components of the ion current measurement circuit are positioned in close proximity of the ignition system and the signal processor to avoid voltage drop due to long wiring running between them. The voltage divider resistor network limits loss of spark current and ensures adequate ion current flows through the sensing resistor to measure the voltage level of the ion current signal. Magnitude and shape of the ion current signal provides information about the misfire event. Thus, the ion current measurement is indicative of the combustion event as well as the quality of combustion.

Misfire detection using the misfire detection system will intimate user of the IC engine or a vehicle employing the IC engine about the misfire events in the spark ignition engine and by investigating and rectifying the causes of misfire, the performance of the vehicle is improved, thereby improving reliability, durability, mileage of the vehicle, and comfort offered to the user of the vehicle. Misfire detection will intimate driver about the misfire events in the vehicle and by investigating and rectifying the causes of misfire, the user can improve the performance of vehicle. Also, timely detection of misfire in the engine and rectification of the fault reduces catalyst and lambda performance degradation in the vehicle. In addition to detecting the occurrence of the misfire, the misfire detection system of the present invention can perform knock detection, determine spark plug timing and perform spark duration measurement, perform analysis of quality of combustion in the engine, and aid in spark plug maintenance of the engine, using the ion current measurement circuit.

### LIST OF REFERENCE NUMERALS

100- Existing ignition system
101- Primary winding
101A- second end of primary winding
101B- first end of primary winding
102- power source
103- secondary winding
103A- second end of secondary winding
103B- first end of secondary winding
104- Electrical switching device
105- control unit
106- spark plug
106A- first terminal
106B- second terminal
107- ignition coil
201-existing ion current measurement circuit
300- misfire detection system
301-first diode
302-ion current measurement circuit (present invention)
302A- voltage control element
302B-biasing resistor
302B1-first terminal
302B2-second terminal
302C-biasing capacitor
302D-second diode
302F-sensing resistor
303-ignition system (present invention)
401- signal processor

## Claims

1. A misfire detection system (300) of an internal combustion engine, the misfire detection system (300) comprising:
an ignition system (303) comprising:
an ignition coil (107) comprising a primary winding (101) and a secondary winding (103), and
a spark plug;
an ion current measurement circuit (302) for measuring an ion current generated from the spark plug (106) after a sparking event, and
a signal processor (401) configured for processing and conditioning the ion current measured by the ion current measurement circuit (302) to determine an occurrence of a misfire in the internal combustion engine,
**characterized by**
the first end of (101B) of the primary winding (101) being electrically connected to a first end (103B) of the secondary winding (103), and a second end (101A) of the primary winding (101) of the ignition coil (107) being operatively coupled to a power source (102) through a first diode (301), the first diode (301) being configured to allow a flow of a primary current in the primary winding (101) to generate a primary voltage and preventing a flow of an ion current through the first end (103B) of the secondary winding (103) into the primary winding (101);
said spark plug (106) being electrically connected in series to a second end (103A) of the secondary winding (103) of the ignition coil (107),
wherein a first terminal (106A) of the spark plug (106) is connected to the second end (103A) of the secondary winding (103) and a second terminal (106B) of the spark plug (106) is grounded; and
the ion current measurement circuit (302) being electrically connected to the first end (101B) of the primary winding (101) and a first end (103B) of the secondary winding (103).

2. The misfire detection system (300) of claim 1,
wherein the first end (101B) of the primary winding (101) of the ignition coil (107) is operatively coupled to an electrical switching device (104) for a generating a primary voltage in the primary winding (101) and a secondary voltage in the secondary winding (103) of the ignition coil (107), and
wherein the electrical switching device (104) is controlled by a control unit (105).

3. The misfire detection system (300) of claim 1,
wherein the ion current measurement circuit (302) comprises a biasing resistor (302B) and a biasing capacitor (302C) connected to the first end (103B) of the secondary winding (103) for generating a bias voltage for the spark plug (106),
wherein a first terminal (302B1) of the biasing resistor (302B) is connected in series to the first end (103B) of the secondary winding (103),
wherein the biasing capacitor (302C) is connected in series to a second terminal (302B2) of the biasing resistor (302B), and
wherein the biasing capacitor (302C) charges using a spark current during the spark event in the spark plug (106) and discharges after the sparking event for providing the bias voltage for the spark plug (106), and
wherein the biasing capacitor (302C) and the biasing resistor (302B) define time constant of the ion current measurement circuit (302) and a rate of charging and discharging of the biasing capacitor (302C).

4. The misfire detection system (300) of claim 3, wherein the ion current measurement circuit (302) further comprises a voltage control element (302A) connected parallel to the biasing capacitor (302C) for limiting the bias voltage across the biasing capacitor (302C) during charging.

5. The misfire detection system (300) of claim 4, wherein the voltage control element (302A) is a zener diode.

6. The misfire detection system (300) of claim 4, wherein the ion current measurement circuit (302) further comprises a voltage divider resistor network (302E and 302F), comprising a sensing resistor (302F), connected in series between the biasing capacitor (302C) and ground for measuring the ion current.

7. The misfire detection system (300) of claim 6, wherein the ion current measurement circuit (302) further comprises a second diode (302D) connected in parallel to the sensing resistor (302F) for providing a low impedance path for a spark current and impeding flow of the ion current.

8. The misfire detection system (300) of claim 1, wherein the signal processor (401) determines the occurrence of the misfire based on oscillations in the measured ion current.

9. The misfire detection system (300) of claim 1, wherein the ion current measurement circuit (302) comprises:
a biasing resistor (302B) connected in series with a first end (101B) of a primary winding (101) and a first end (103B) of a secondary winding (103) of an ignition coil (107), and
a biasing capacitor (302C) connected in series to a second terminal (302B2) of the biasing resistor (302B) for generating a bias voltage for the spark plug (106).

## Patentansprüche

1. Fehlzündungserkennungssystem (300) für einen Verbrennungsmotor, wobei das Fehlzündungserkennungssystem (300) aufweist:
ein Zündsystem (303) aufweisend
eine Zündspule (107) mit einer Primärwicklung (101) und einer Sekundärwicklung (103) und
eine Zündkerze;
eine Ionenstrom-Messschaltung (302) zum Messen eines von der Zündkerze (106) nach einem Zündvorgang erzeugten Ionenstroms, und
einen Signalprozessor (401), der zum Verarbeiten und Aufbereiten des von der Ionenstrom-Messschaltung (302) gemessenen Ionenstroms zum Feststellen eines Auftretens einer Fehlzündung im Verbrennungsmotor eingerichtet ist,
**dadurch gekennzeichnet, dass**
das erste Ende (101B) der Primärwicklung (101) elektrisch mit einem ersten Ende (103B) der Sekundärwicklung (103) verbunden ist und ein zweites Ende (101A) der Primärwicklung (101) der Zündspule (107) über eine erste Diode (301) betriebsmäßig mit einer Stromquelle (102) gekoppelt ist, wobei die erste Diode (301) dazu eingerichtet ist, den Fluss eines Primärstroms in der Primärwicklung (101) zur Erzeugung einer Primärspannung zu gestatten, wobei sie den Fluss eines Ionenstroms durch das erste Ende (103B) der Sekundärwicklung (103) in die Primärwicklung (101) verhindert;
wobei die Zündkerze (106) elektrisch in Reihe mit einem zweiten Ende (103A) der Sekundärwicklung (103) der Zündspule (107) verbunden ist,
wobei ein erster Anschluss (106A) der Zündkerze (106) mit dem zweiten Ende (103A) der Sekundärwicklung (103) verbunden ist und ein zweiter Anschluss (106B) der Zündkerze (106) geerdet ist; und
die Ionenstrom-Messschaltung (302) elektrisch mit dem ersten Ende (101B) der Primärwicklung (101) und einem ersten Ende (103B) der Sekundärwicklung (103) verbunden ist.

2. Fehlzündungserkennungssystem (300) nach Anspruch 1,
wobei das erste Ende (101B) der Primärwicklung (101) der Zündspule (107) betriebsmäßig mit einer elektrischen Schaltvorrichtung (104) gekoppelt ist, zum Erzeugen einer Primärspannung in der Primärwicklung (101) und einer Sekundärspannung in der Sekundärwicklung (103) der Zündspule (107), und
wobei die elektrische Schaltvorrichtung (104) von einer Steuereinheit (105) gesteuert wird.

3. Fehlzündungserkennungssystem (300) nach Anspruch 1,
wobei die Ionenstrom-Messschaltung (302) einen Vorspannungswiderstand (302B) und einen Vorspannungskondensator (302C) aufweist, die mit dem ersten Ende (103B) der Sekundärwicklung (103) verbunden sind, zum Erzeugen einer Vorspannung für die Zündkerze (106),
wobei ein erster Anschluss (302B1) des Vorspannungswiderstands (302B) in Reihe mit dem ersten Ende (103B) der Sekundärwicklung (103) verbunden ist,
wobei der Vorspannungskondensator (302C) in Reihe mit einem zweiten Anschluss (302B2) des Vorspannungswiderstands (302B) verbunden ist, und
wobei der Vorspannungskondensator (302C) sich mittels eines Zündstroms während des Zündvorgangs in der Zündkerze (106) auflädt und nach dem Zündvorgang entlädt, um die Vorspannung für die Zündkerze (106) zu liefern, und
wobei der Vorspannungskondensator (302C) und der Vorspannungswiderstand (302B) die Zeitkonstante der Ionenstrom-Messschaltung (302) und die Lade- und Entladerate des Vorspannungskondensators (302C) definieren.

4. Fehlzündungserkennungssystem (300) nach Anspruch 3, wobei die Ionenstrom-Messschaltung (302) zudem ein parallel zum Vorspannungskondensator (302C) geschaltetes Spannungssteuerelement (302A) aufweist, zum Begrenzen der Vorspannung an dem Vorspannungskondensator (302C) während des Ladevorgangs.

5. Fehlzündungserkennungssystem (300) nach Anspruch 4, wobei das Spannungssteuerelement (302A) eine Zener-Diode ist.

6. Fehlzündungserkennungssystem (300) nach Anspruch 4, wobei die Ionenstrom-Messschaltung (302) zudem ein Spannungsteiler-Widerstandsnetzwerk (302E und 302F) umfasst, mit einem Messwiderstand (302F), der in Reihe zwischen dem Vorspannungskondensator (302C) und Erdung geschaltet ist, um den Ionenstrom zu messen.

7. Fehlzündungserkennungssystem (300) nach Anspruch 6, wobei die Ionenstrom-Messschaltung (302) zudem eine zweite Diode (302D) aufweist, die parallel zum Messwiderstand (302F) geschaltet ist, um einen Pfad niedriger Impedanz für einen Zündstrom zu bieten und den Fluss des Ionenstroms zu behindern.

8. Fehlzündungserkennungssystem (300) nach Anspruch 1, wobei der Signalprozessor (401) das Auftreten der Fehlzündung anhand von Schwingungen im gemessenen Ionenstrom bestimmt.

9. Fehlzündungserkennungssystem (300) nach Anspruch 1, wobei die Ionenstrom-Messschaltung (302) aufweist:
einen Vorspannungswiderstand (302B), der in Reihe mit einem ersten Ende (101B) einer Primärwicklung (101) und einem ersten Ende (103B) einer Sekundärwicklung (103) einer Zündspule (107) geschaltet ist, und
einen Vorspannungskondensator (302C), der in Reihe mit einem zweiten Anschluss (302B2) des Vorspannungswiderstands (302B) geschaltet ist, zum Erzeugen einer Vorspannung für die Zündkerze (106).

## Revendications

1. Système de détection de ratés d'allumage (300) d'un moteur à combustion interne, le système de détection de ratés d'allumage (300) comprenant :
un système d'allumage (303) comportant :
une bobine d'allumage (107) comprenant un enroulement primaire (101) et un enroulement secondaire (103), et
une bougie d'allumage ;
un circuit de mesure de courant ionique (302) pour mesurer un courant ionique généré par la bougie d'allumage (106) après un événement d'allumage, et
un processeur de signaux (401) configuré pour traiter et conditionner le courant ionique mesuré par le circuit de mesure de courant ionique (302) afin de déterminer la survenue d'un raté d'allumage dans le moteur à combustion interne,
**caractérisé par**
la première extrémité (101B) de l'enroulement primaire (101) étant connectée électriquement à une première extrémité (103B) de l'enroulement secondaire (103), et une deuxième extrémité (101A) de l'enroulement primaire (101) de la bobine d'allumage (107) étant couplée de manière opérationnelle à une source d'alimentation (102) par l'intermédiaire d'une première diode (301), la première diode (301) étant configurée pour permettre un flux de courant primaire dans l'enroulement primaire (101) afin de générer une tension primaire, en empêchant un flux de courant ionique à travers la première extrémité (103B) de l'enroulement secondaire (103) dans l'enroulement primaire (101) ;
ladite bougie d'allumage (106) étant connectée électriquement en série à une deuxième extrémité (103A) de l'enroulement secondaire (103) de la bobine d'allumage (107),
une première borne (106A) de la bougie d'allumage (106) étant connectée à la deuxième extrémité (103A) de l'enroulement secondaire (103) et une deuxième borne (106B) de la bougie d'allumage (106) étant mise à la terre ; et
le circuit de mesure du courant ionique (302) étant connecté électriquement à la première extrémité (101B) de l'enroulement primaire (101) et à une première extrémité (103B) de l'enroulement secondaire (103).

2. Système de détection de ratés d'allumage (300) selon la revendication 1,
la première extrémité (101B) de l'enroulement primaire (101) de la bobine d'allumage (107) étant couplée de manière opérationnelle à un dispositif de commutation électrique (104) pour générer une tension primaire dans l'enroulement primaire (101) et une tension secondaire dans l'enroulement secondaire (103) de la bobine d'allumage (107), et
le dispositif de commutation électrique (104) étant commandé par une unité de commande (105).

3. Système de détection de ratés d'allumage (300) selon la revendication 1,
le circuit de mesure du courant ionique (302) comportant une résistance de polarisation (302B) et un condensateur de polarisation (302C) connectés à la première extrémité (103B) de l'enroulement secondaire (103) pour générer une tension de polarisation pour la bougie d'allumage (106),
une première borne (302B1) de la résistance de polarisation (302B) étant connectée en série à la première extrémité (103B) de l'enroulement secondaire (103),
le condensateur de polarisation (302C) étant connecté en série à une deuxième borne (302B2) de la résistance de polarisation (302B), et
le condensateur de polarisation (302C) se chargeant à l'aide d'un courant d'étincelle pendant l'événement d'étincelle dans la bougie d'allumage (106) et se déchargeant après l'événement d'étincelle afin de fournir la tension de polarisation pour la bougie d'allumage (106), et
le condensateur de polarisation (302C) et la résistance de polarisation (302B) définissant la constante de temps du circuit de mesure du courant ionique (302) et une vitesse de charge et de décharge du condensateur de polarisation (302C).

4. Système de détection de ratés d'allumage (300) selon la revendication 3, dans lequel le circuit de mesure de courant ionique (302) comprend en outre un élément de commande de tension (302A) connecté en parallèle au condensateur de polarisation (302C) pour limiter la tension de polarisation aux bornes du condensateur de polarisation (302C) pendant la charge.

5. Système de détection de ratés d'allumage (300) selon la revendication 4, dans lequel l'élément de commande de tension (302A) est une diode Zener.

6. Système de détection de ratés d'allumage (300) selon la revendication 4, dans lequel le circuit de mesure du courant ionique (302) comprend en outre un réseau de résistances diviseurs de tension (302E et 302F), comprenant une résistance de détection (302F) connectée en série entre le condensateur de polarisation (302C) et la masse pour mesurer le courant ionique.

7. Système de détection de ratés d'allumage (300) selon la revendication 6, dans lequel le circuit de mesure du courant ionique (302) comprend en outre une deuxième diode (302D) connectée en parallèle à la résistance de détection (302F) pour fournir un chemin à faible impédance pour un courant d'étincelle et empêcher l'écoulement du courant ionique.

8. Système de détection de ratés d'allumage (300) selon la revendication 1, dans lequel le processeur de signaux (401) détermine la survenue du raté d'allumage sur la base des oscillations du courant ionique mesuré.

9. Système de détection de ratés d'allumage (300) selon la revendication 1, dans lequel le circuit de mesure du courant ionique (302) comprend :
une résistance de polarisation (302B) connectée en série avec une première extrémité (101B) d'un enroulement primaire (101) et une première extrémité (103B) d'un enroulement secondaire (103) d'une bobine d'allumage (107), et
un condensateur de polarisation (302C) connecté en série à une deuxième borne (302B2) de la résistance de polarisation (302B) pour générer une tension de polarisation pour la bougie d'allumage (106).
